# EUROPEAN PATENT SPECIFICATION

(11) **EP 0 919 128 B1**
(45) Date of publication and mention of the grant of the patent: **11.02.2004**
(21) Application number: 98309677.7
(22) Date of filing: 25.11.1998
(51) Int. Cl.: A21C 3/02

(54) **Production apparatus for belt-form edible dough**
Vorrichtung zur Herstellung von bandförmigem essbarem Teig
Dispositif de production d'une pâte alimentaire en forme de bande

(30) Priority: 25.11.1997 JP 32349097
(43) Date of publication of application: 02.06.1999
(73) Proprietor: RHEON AUTOMATIC MACHINERY CO. LTD., Utsunomiya-shi Tochigi-ken (JP)
(72) Inventor: Morikawa, Michio, Utsunomiya-shi, Tochigi-ken (JP); Takao, Kenji, Utsunomiya-shi, Tochigi-ken (JP); Hirobayashi, Koichi, Utsunomiya-shi, Tochigi-ken (JP)
(74) Representative: Leale, Robin George

(56) References cited:
- EP-A- 0 453 248
- EP-A- 0 545 725
- EP-A- 0 657 101
- EP-A- 0 744 126
- EP-A- 0 783 837
- EP-A- 0 845 212
- WO-A-88/04891

## Description

This invention relates to a production apparatus for belt-form edible dough, that divides the edible dough and shapes it into a belt-form, and to a method of operating such apparatus.

A production apparatus of the prior art (e.g. EP-A-0783837) has a body frame as its base and a hopper for receiving edible dough, e.g. dough for bread. A dividing cutter device that cuts and divides edible dough is provided at the bottom opening of the hopper. A shaping hopper into which the divided edible dough bodies are charged is disposed below the dividing cutter device. A level sensor that can switch between ON and OFF is disposed to detect when the level of the edible dough in the shaping hopper has reached a predetermined level. A pair of shaping/conveying devices, which are V-shaped to squeeze the dough to be shaped into a belt-form and to convey it downwards, are disposed at the bottom opening of the shaping hopper. A conveying motor for driving the said pair of shaping/conveying devices is disposed at a suitable position. A conveyor to carry away the belt-form edible dough is disposed below the pair of shaping/conveying devices.

The above production apparatus also has a control means. When the level of the edible dough reaches the predetermined level within the shaping hopper, the level sensor switches from OFF to ON. The control means responds to this to start the drive of the said conveying. When the level sensor switches from ON to OFF after this start, the control means responds to this to start the dividing cutter.

As explained above, after the edible dough is placed in the hopper for supplying the divider, and is cut and divided by the dividing cutter device, the dough is charged into the shaping hopper. By repeating the above cycle a plurality of times, the level of the edible dough reaches the predetermined level in the shaping hopper. By this, the level sensor switches from OFF to ON. Then the control means responds to start the conveying motor. This results in the pair of shaping/conveying devices squeezing the dough into a belt-form and conveying the belt-form edible dough downwards to discharge it onto the next conveyor. The edible dough is then carried by this conveyor to the next production system.

When the edible dough is discharged through the discharge gap, the level of the dough in the shaping hopper gradually becomes lower than the predetermined level. By this, the level sensor switches from ON to OFF. The control means responds to this to start the dividing cutter device to cut and divide the dough. Then the dough is charged into the shaping hopper. Thereafter the dough is shaped into a belt-form and discharged onto the next conveyor. This cycle is repeated whenever the level sensor switches from ON to OFF.

However, it is difficult to stabilize the hourly throughput of the belt-form edible dough when using this known production apparatus. When the hourly throughput of the edible dough varies, keeping a good condition of the dough is difficult and this results in the belt-form edible dough being inefficiently processed at the next stage of production.

Viewed from one aspect, the present invention provides a production apparatus for belt-form edible dough comprising:
a divider hopper for edible dough, for supplying the dough to a divider;
a dividing cutter device arranged to cut and divide edible dough at the bottom opening of the said divider hopper;
an upper conveyor arranged to carry divided dough bodies downstream and disposed below the said dividing cutter device;
a shaping hopper arranged to receive the divided dough bodies and disposed below the downstream end of the said upper conveyor;
a level sensor switchable between ON or OFF, arranged to detect whether the level of the edible dough in the shaping hopper has reached a predetermined level;
a pair of shaping/conveying devices arranged in a V-shaped configuration to squeeze and shape the dough into a belt-form and to convey it downward, disposed at the bottom opening of the said shaping hopper;
a conveying motor for driving the said shaping/conveying devices;
an adjusting device for setting an adjusted discharge gap interval between the said shaping/conveying devices;
a conveyor arranged to carry the belt-form edible dough and disposed below the said pair of shaping/conveying devices;
a control means arranged to energise the said conveying motor for driving the shaping/conveying devices when the said level sensor switches from OFF to ON due to the edible dough reaching a predetermined level in the shaping hopper, and to control the charging of the divided edible dough bodies into the shaping hopper when the level sensor switches from ON to OFF, after the said motor for driving the shaping/conveying devices is energised;
a weight-detecting device arranged to successively detect the weight of each of the divided dough bodies dropped onto the upper conveyor;
a timer arranged to successively detect the time taken for charging the divided edible dough bodies from the upper conveyor into the shaping hopper; and
a calculating device arranged to calculate the hourly throughput of edible dough by dividing the weight of a number of divided edible dough bodies by the time taken for charging that number of divided edible dough bodies after the energisation of the said motor;
the said adjusting device being arranged to increase the average (or minimum) size of the discharge gap when the hourly throughput is below a predetermined amount and reduce the average (or minimum) size of the discharge gap when the hourly throughput is above said predetermined amount.

In operation of such apparatus, the divided edible dough bodies are dropped onto the upper conveyor after being cut and divided by the dividing cutter device. Having been carried downstream by the upper conveyor, the dough is dropped into the shaping hopper from the downstream end of the upper conveyor. By repeating this cycle a plurality of times, the level sensor switches from OFF to ON due to the level of the dough in the shaping hopper reaching the predetermined level. The control means responds to this to start the conveying motor. The pair of shaping/conveying devices then squeezes the edible dough into a belt-form and discharges it through the discharge gap onto the lower conveyor. The belt-form edible dough is then carried by the lower conveyor to the next production section.

When the edible dough is discharged through the discharge gap, the level sensor switches from ON to OFF due to the level of the dough in the shaping hopper becoming lower than the predetermined level. Then the divided edible dough bodies are charged into the shaping hopper from the downstream end of the upper conveyor. Thereafter, the charged edible dough is shaped into a belt-form and conveyed onto the lower conveyor. This cycle is repeated whenever the level sensor switches from ON to OFF.

During the process of charging the divided edible dough bodies, shaping the dough into a belt-form and conveying it onto the lower conveyor, the weight-detecting device successively detects the weight of each divided edible dough body, and the timer successively detects the time taken to charge the divided edible dough bodies into the shaping hopper. Then the calculating device calculates the hourly throughput of the edible dough by dividing the weight of a number of divided edible dough bodies by the time taken for charging that number of dough bodies. Thereafter the said adjusting device enlarges the size of the discharge gap when the hourly throughput is below a predetermined amount and reduces it when the hourly throughput is above the predetermined amount.

In another aspect the invention provides a method of operating the above apparatus comprising the following steps:
(i) a step of suppling divided edible dough bodies onto the said upper conveyor by cutting and dividing the edible dough by the said dividing cutter device;
(ii) a step of conveying the divided dough bodies by means of the said upper conveyor and charging the dough bodies into the said shaping hopper from the downstream end of the upper conveyor after step (i) is finished;
(iii) a step of energising the said conveying motor for driving the said shaping/conveying devices by the said control means when the said level sensor switches from OFF to ON due to the level of the charged dough in the shaping hopper reaching a predetermined level as a result of repeating steps (i) and (ii);
(iv) a step of squeezing and shaping the dough into a belt-form by the said pair of shaping/conveying devices, and conveying the belt-form dough through the discharge gap onto the said lower conveyor after step (ii) is finished;
(v) a step of charging the divided dough bodies into the said shaping hopper from the downstream end of the upper conveyor during step (iv), when the said level sensor switches from ON to OFF due to the level of the dough in the shaping hopper becoming lower than the predetermined level;
(vi) a step of repeating step (v) whenever the level sensor switches from ON to OFF; and
(vii) a step of calculating the hourly throughput of edible dough by dividing the weight of a number of divided edible dough bodies by the time taken for charging that number of dough bodies, by means of the said calculating device, and controlling the said adjusting device by means of the control means so as to adjust the size of the discharge gap between the pair of shaping/conveying devices, namely to enlarge the average (or minimum) size of the gap when the hourly throughput is below a predetermined amount and reduce it when the hourly throughput is above the predetermined amount.

An embodiment of the invention will now be described by way of example and with reference to the accompanying drawings, in which:-
Fig. 1 is an outline front side view of a production apparatus for belt-form edible dough;
Fig. 2 is an enlarged view of the section indicated by the arrow "II" in Fig. 1; and
Fig. 3 is a block diagram of a controlling device.

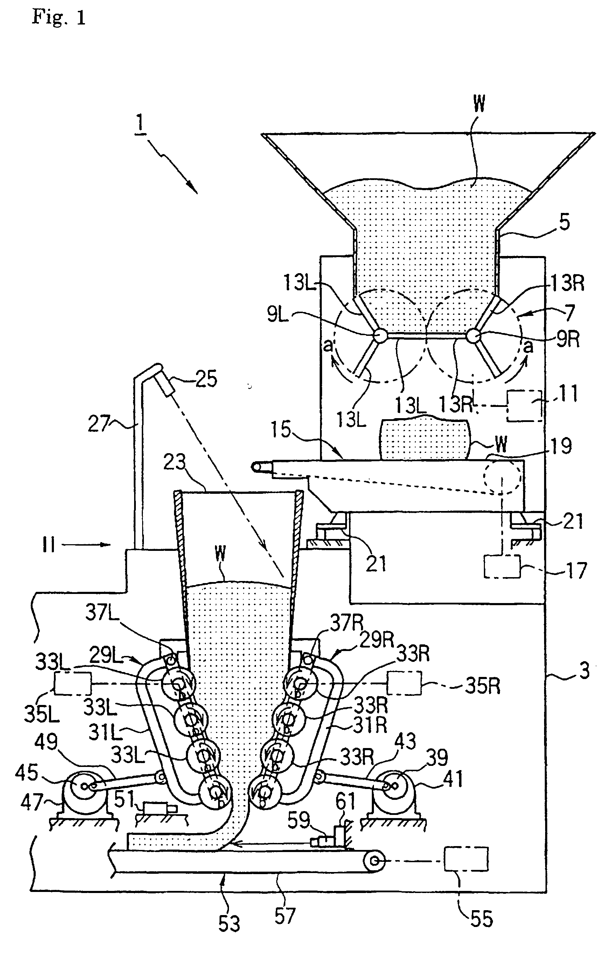

Referring to Fig. 1, a production apparatus 1 for belt-form edible dough (e.g. dough for bread) that divides edible dough W and shapes it into belt-form, has a body frame 3 as its base. A divider hopper 5 is disposed at the upper section of the body frame 3 (in the upper section of Fig. 1) and a dividing cutter device 7 to cut and divide the dough W is disposed at the bottom opening of the divider hopper 5.

The dividing cutter device 7 is a known device, as shown in EP-A2-0791 293. Briefly explained, a pair of rotatable rotating axles 9L and 9R are disposed near the bottom opening of the hopper 5 for the divider, and the pair of rotating axles 9L and 9R are rotated simultaneously toward the conveying direction (in the direction of the arrow a of Fig. 1) by the drive of a motor 11 for a cutter. Each of the rotating axles 9L and 9R holds a plurality of cutters 13L and 13R, respectively. By the simultaneous rotation of the pair of rotating axles 9L and 9R, the ends of pairs of the cutters 13L and 13R contact each other to cut the dough W and to shut the bottom opening of the divider hopper 5.

An upper conveyor 15, which carries the divided dough bodies W, is disposed below the dividing cutter device 7. The upper conveyor 15 has a belt 19 which is rotatable by the drive of a rotation motor 17. A load cell 21, to detect the weight of the divided edible dough bodies W, is disposed on the body frame 3 so as to support the upper conveyor 15.

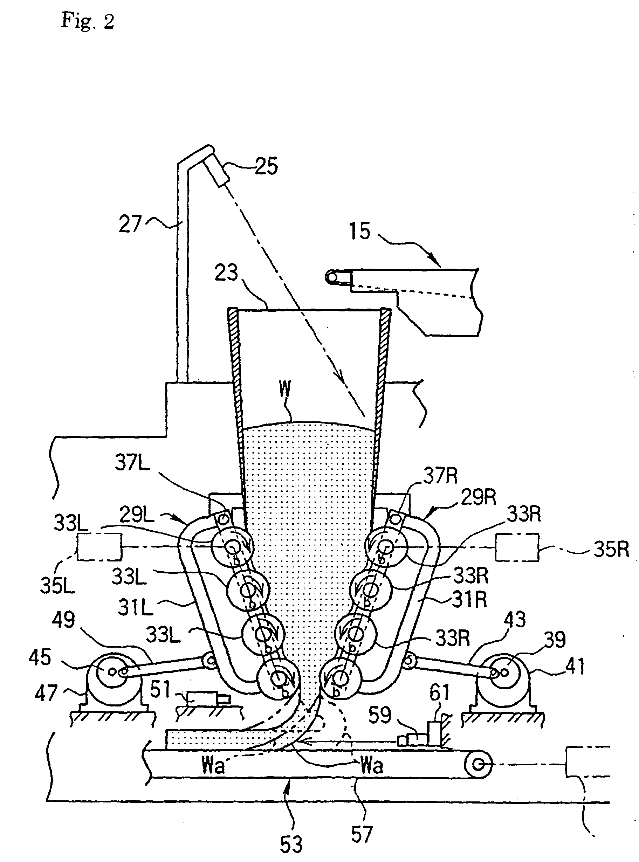

As seen in Figs. 1 and 2, a shaping hopper 23, into which the divided edible dough bodies are charged, is disposed below the downstream section of the upper conveyor 15 (seen in the left section of Figs. 1 and 2). On the body frame 3, a level sensor 25 is disposed above the hopper 23 by a bracket 27. The level sensor 25 can switch from ON to OFF. It switches when it is detected that the limit height of the edible dough inside the hopper 23 has reached a predetermined level.

A pair of roller members 29L and 29R, which form a V-shape, are disposed at the lower opening section of the shaping hopper 23. The pair of roller members 29L and 29R squeeze to shape the edible dough into a belt-form, and to convey it downward. The roller member 29L holds a roller-supporting member 31L which is disposed on the left side of the lower opening section (seen in the left part of Figs. 1 and 2), and a plurality of shaping/conveying rollers 33L are disposed side-by-side from the uppermost part to the lowermost part of the roller supporting member 31L. Similarly, the roller member 29R holds a roller-supporting member 31R disposed on the right side of the lower opening section, and a plurality of shaping/conveying rollers 33R are disposed side-by-side from the uppermost part to the lowermost part of the roller supporting member 31R. The plurality of shaping/conveying rollers 33L and 33R simultaneously rotate in the conveying direction (toward the arrow b in Fig. 1) by the drive of motors 35L and 35R for conveying respectively. Instead of the circular shape as shown in Fig. 1, the cross-sectional shape of the shaping/conveying rollers 33L and 33R can be polygonal.

The right-side roller-supporting member 31R has a swinging axis 37R as its swinging center. It can swing forward and away from the supporting member 31L to accelerate the discharge from the bottom gap between the pair of roller members 29L and 29R. To swing the roller-supporting member 31R, a discharge accelerating motor 41 that rotates a disk-shaped driving link 39 is positioned on the body frame 3. This driving link 39 and the roller-supporting member 31R are connected by a connecting link 43.

The left-side roller-supporting member 31L has a swinging axis 37L as its swinging center. It can move towards and away from the roller-supporting member 31R to adjust the size of the bottom gap between the pair of roller members 29L and 29R. To adjust the position of the roller-supporting member 31L, a motor 47 for gap-adjusting, which is similar to a servo motor and rotates a disk shaped driving link 45, is positioned on the body frame 3. This driving link 45 and the roller-supporting member 31L are connected by a connecting link 49. Further, a gap-detecting sensor (e.g., a potentiometer) 51, which detects the average size of the gap for discharging (or its minimum size) between the roller members 29L and 29R, is disposed on the body frame 3.

A lower conveyor 53, which carries the belt-form edible dough W, is disposed below the roller members 29L and 29R. This lower conveyor 53 has a belt 57, which is caused to rotate by the drive of a running motor 55. A flow-amount detecting sensor 59 is disposed by the bracket 61 near the upstream part of the lower conveyor 53. This flow-amount detecting sensor 59 acts to detect a part of the dough W i.e. the amount of dough flowing perpendicularly from the gap for discharging toward the lower conveyor 51 (the dough section Wa).

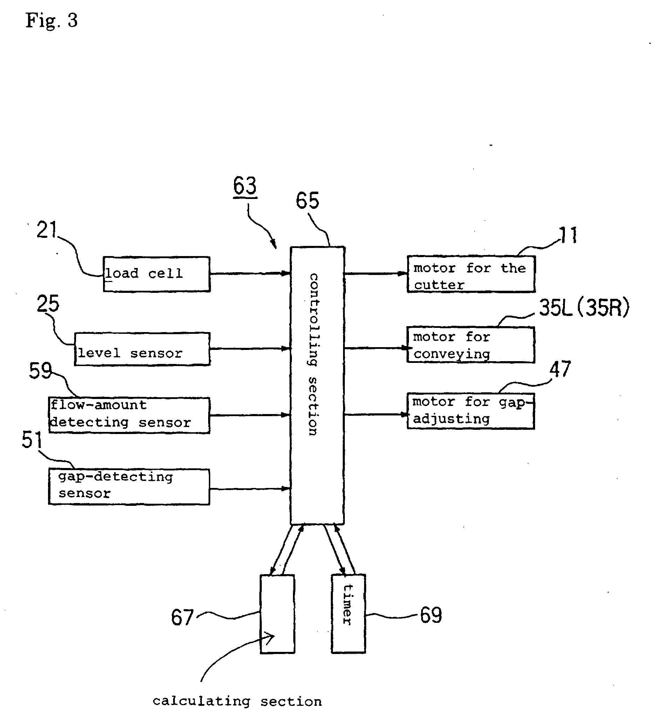

In Fig. 3, a controlling device 63, which is part of the belt-form edible dough-producing apparatus 1, is shown. This controlling device 63 has a controlling section 65, a calculating section 67, and a timer 69. The controlling section 65 is connected to the sensors, i.e. the load cell 21, the level sensor 25, the gap-detecting sensor 51, and the flow-amount detecting sensor 59, and to the actuators, i.e. the motor 11 for the cutter, the motors 35L and 35R for conveying, and the motor 47 for gap-adjusting).

The timer 69 is for successively detecting the time taken to charge each divided dough body W (e.g. the time between the level sensor 25 switching from ON to OFF and its next switching from ON to OFF) into the shaping hopper 23 from the downstream section of the upper conveyor 15. The calculating device 67 calculates the hourly throughput of the edible dough W by dividing the weight of a certain number (in the preferred embodiment of the invention, three) of divided edible dough bodies W by the time taken to charge that number of the divided dough bodies W. When the level sensor switches from OFF to ON due to the upper limit level of the edible dough W reaching the predetermined level within the shaping hopper 23, the controlling section 65 acts to simultaneously start the rotation of the pair of motors 35R and 35L for conveying. After the motors 35L and 35R start rotating and the level sensor switches from ON to OFF, the controlling section acts to start the actuation of the motor 11 for the cutter. Further, if the hourly throughput of the edible dough W is found to be below the predetermined goal, the controlling section 65 controls the motor 47 for gap-adjusting to expand the average size (or the minimum size) of the discharge gap between the pair of roller members 29L and 29R. If the hourly throughput of the edible dough W is found to be above the predetermined goal, the controlling section 65 controls the motor 47 for gap-adjusting to reduce the average size (or the minimum size) of the discharge gap between the pair of roller members 29L and 29R. If the dough section Wa of the edible dough flows mainly toward the downstream part of the lower conveyor 53 from the perpendicular direction (as in the dotted line of Fig. 2), the controlling section 65 controls the motors 35L and 35R for conveying to speed up the rotation of the shaping/conveying rollers 33L and 33R. If the dough section Wa of the edible dough bends toward the upstream part of the lower conveyor 53 from the perpendicular direction (as in the dotted line of Fig. 2), the controlling section 65 controls the motors 35L and 35R to slow down the rotation of the shaping/conveying rollers 33L and 33R.

The manner of use of the belt-form edible dough producing apparatus and its effects are explained as follows:

### Step (i)

By rotating the pair of rotating axles 9L and 9R toward the cutting direction after the edible dough W is charged into the divider hopper 5, the edible dough W 18 is cut and divided by the pairs of cutters 13L and 13R. By this function, divided edible dough bodies W are impelled onto the upper conveyor 15.

### Step (ii)

After the step (i) is finished, the upper conveyor 15 carries the divided edible dough bodies W toward the conveying direction and charges the dough into the shaping hopper 23 from its downstream end.

### Step (iii)

By repeating steps (i) and (ii), when the level sensor 25 switches from OFF to ON due to the upper limit level of the edible dough W inside the shaping hopper 23 reaching the predetermined level within the hopper, the controlling section 65 starts the drive of the motors 35L and 35R for conveying.

### Step (iv)

After step (iii) is finished, the pair of roller members 29L and 29R squeeze the edible dough W into a belt-form and discharge it through the gap for discharging onto the lower conveyor 53. The lower conveyor 53 carries the divided edible dough bodies W toward the conveying direction, to the next stage of production.

The right-side roller member 29R is continuously swung toward and away from the left-side supporting roller member 29L by the drive of discharging accelerating motor 41. This is done while the edible dough W is being discharged through the gap for discharging between the pair of roller members 29L and 29R. Swinging the right-side roller members 29R away from the left-side roller members 29L results in an upward pressure that decreases in the part of the dough at the upper sides of the gap. This accelerates the flow of the edible dough W into the gap due to its own weight. Swinging the right-side roller member toward the left-side roller member 29L results in the pair of roller members 29L and 29R shaping the edible dough W into a belt-form.

When the belt-form edible dough is discharged through the discharge gap between the pair of roller members 29L and 29R, the flow-amount detecting sensor 59 detects the part of dough W that is flowing perpendicularly from the gap for discharging towards the lower conveyor 52. If most of the edible dough flows toward the downstream part of the lower conveyor 53 from the perpendicular direction, the controlling section 65 controls the motors 35L and 35R for conveying to speed up the rotation of the shaping/conveying rollers 33R and 33R. If the edible dough deviates toward the upstream part of the lower conveyor 53 from the perpendicular direction, the controlling section 65 controls the motors 35L and 35R for conveying to slow down the rotation of the shaping/conveying rollers 33L and 33R.

### Step (v)

If the level sensor 25 switches from ON to OFF during the step (iv) due to the upper level of the edible dough W charged into the shaping hopper 23 becoming lower than the predetermined level, the controlling section 65 actuates the motor 11 for the cutter to cut and divide the dough W by a pair of cutters 13L and 13R. The upper conveyor 15 carries the divided edible dough body W in the conveying direction to charge it into the shaping hopper 23 from the downstream end of the upper conveyor 15. As above, the charged dough W is shaped into belt-form and conveyed onto the lower conveyor 53.

### Step (vi)

Step (v) is repeated whenever the level sensor switches from ON to OFF.

### Step (vii)

The calculating device 67 calculates the hourly throughput of the edible dough W by detecting the weight of a number (in the preferred embodiment, three) of the divided edible dough bodies W by the time taken to charge that number of the divided dough bodies W into the shaping/conveying hopper 23 during steps (iv), (v) and (vi). If the hourly throughput of the edible dough W is found to be below the predetermined goal, the controlling section 65 controls the motor 47 for gap-adjusting to expand the average size (or the minimum size) of the discharge gap between the pair of roller members 29L and 29R.

The pair of roller members 29L and 29R that carry the shaping/conveying rollers 33L and 33R can be replaced by a pair of shaping/conveying belt devices that carry belts extending from their uppermost parts to their lowermost parts and which rotate in the conveying direction.

As above, during the charging, shaping, and conveying of the edible dough W, if the hourly throughput of the edible dough W is found to be below the predetermined goal, the average size of the discharge gap between the pair of roller members 29L and 29R is expanded. If the hourly throughput of the edible dough W is found to be above the predetermined goal, the average size of the gap between the pair of roller members 29L and 29R is reduced. By this, the hourly throughput of the belt-form edible dough W that is discharged is kept at a certain amount (the predetermined goal). The condition of the dough will be well-kept, and the belt-form edible dough will be efficiently disposed for the next stage of production.

Further, the discharging of the belt-form dough W will be accelerated. This will result in the efficient production of the belt-form dough W.

Furthermore, since for long periods most of the dough section Wa of the edible dough W will not deviate toward the downstream part of the lower conveyor 53 from the perpendicular direction, the dough section Wa will not be separated. Therefore, the belt-form edible dough W will be continuously discharged. Further, since for long periods the dough section Wa of the edible dough will not deviate toward the upstream part of the lower conveyor 53 from the perpendicular direction, the belt-form edible dough W will not accumulate between the lower conveyor 53 and the pair of roller members 29L and 29R. Therefore, obstruction of the discharging process of the belt-form dough W will be avoided.

## Claims

1. A production apparatus for belt-form edible dough (W) comprising:
a divider hopper (5) for edible dough, for supplying the dough to a divider;
a dividing cutter device (7) arranged to cut and divide edible dough at the bottom opening of the said divider hopper (5);
an upper conveyor (15) arranged to carry divided dough bodies downstream and disposed below the said dividing cutter device (7);
a shaping hopper (23) arranged to receive the divided dough bodies and disposed below the downstream end of the said upper conveyor (15);
a level sensor (25) switchable between ON or OFF, arranged to detect whether the level of the edible dough in the shaping hopper (23) has reached a predetermined level;
a pair of shaping/conveying devices (29L, 29R) arranged in a V-shaped configuration to squeeze and shape the dough into a belt-form and to convey it downward, disposed at the bottom opening of the said shaping hopper (23);
a conveying motor (35L, 35R) for driving the said shaping/conveying devices (29L, 29R);
an adjusting device (47) for setting an adjusted discharge gap interval between the said shaping/conveying devices (29L, 29R);
a conveyor (53) arranged to carry the belt-form edible dough and disposed below the said pair of shaping/conveying devices (29L, 29R);
a control means arranged to energise the said conveying motor (35L, 35R) for driving the shaping/conveying devices (29L, 29R) when the said level sensor (25) switches from OFF to ON due to the edible dough reaching a predetermined level in the shaping hopper (23), and to control the charging of the divided edible dough bodies into the shaping hopper (23) when the level sensor (25) switches from ON to OFF, after the said motor (35L, 35R) for driving the shaping/conveying device (29L, 29R) is energised;
a weight-detecting device (21) arranged to successively detect the weight of each of the divided dough bodies dropped onto the upper conveyor (15);
a timer (69) arranged to successively detect the time taken for charging the divided edible dough bodies from the upper conveyor into the shaping hopper (23); and
a calculating device (67) arranged to calculate the hourly throughput of edible dough by dividing the weight of a number of divided edible dough bodies by the time taken for charging that number of divided edible dough bodies after the energisation of the said motor (35L, 35R);
the said adjusting device being arranged to increase the average (or minimum) size of the discharge gap when the hourly throughput is below a predetermined amount and reduce the average (or minimum) size of the discharge gap when the hourly throughput is above said predetermined amount.

2. The apparatus of claim 1, in which the said shaping/conveying devices (29L, 29R) comprise a pair of roller members (31L, 31R) carrying a plurality of rollers (33L, 33R) disposed side-by-side from their uppermost rollers to their lowermost rollers, each roller being rotatable in the direction that the dough is conveyed.

3. The apparatus of claim 2, in which at least one of the said pair of roller members (31L, 31R) is mounted at its upper ends on an axis (37L, 37R) to be swingable towards and away from the other said member to accelerate the discharge from the discharge gap between the said members (31L, 31R).

4. The apparatus of claim 2 or 3, wherein said conveying motor for driving the shaping/conveying device is arranged to simultaneously rotate the said shaping/conveying rollers (33L, 33R) of the pair of roller members (31L, 31R); and further comprising:
a flow-amount detecting sensor (59) arranged to detect the amount of belt-form edible dough that is discharged perpendicularly from the discharge gap onto the said conveyor (53); and
control means arranged to control the said conveying motor (35L, 35R) for driving the shaping/conveying device (29L, 29R) to increase the rotating speed of the said shaping/conveying rollers (33L, 33R) if the dough is detected to be deviating toward the downstream end of the said conveyor (53) from the perpendicular direction, and to slow down the rotating speed of the said rollers (33L, 33R) if the dough is detected to be deviating toward the upstream end of the conveyor (53) from the perpendicular direction.

5. The apparatus of claim 1, in which the said shaping/conveying devices comprise a pair of shaping/conveying belts rotatable in the direction that the dough is conveyed, the belts extending from the uppermost part to the lowermost part of those devices, and at least one of the said devices being mounted on an axis at its upper end to be swingable towards and away from the other device so as to accelerate discharge of dough from a bottom gap between the two belts.

6. The apparatus of any of the preceding claims, in which the said control means is arranged to actuate the said dividing cutter device (7) when the said level sensor (25) switches from ON to OFF after the energisation of the conveying motor (35L, 35R).

7. A method of operating the apparatus of claim 1, comprising the following steps:
(i) a step of supplying divided edible dough bodies (W) onto the said upper conveyor (15) by cutting and dividing the edible dough by the said dividing cutter device (7);
(ii) a step of conveying the divided dough bodies by means of the said upper conveyor (15) and charging the dough bodies into the said shaping hopper (23) from the downstream end of the upper conveyer (15) after step (i) is finished;
(iii) a step of energising the said conveying motor (35L, 35R) by the said control means when the said level sensor (25) switches from OFF to ON due to the level of the charged dough in the shaping hopper (23) reaching a predetermined level as a result of repeating steps (i) and (ii);
(iv) a step of squeezing and shaping the dough into a belt-form by the said pair of shaping/conveying devices (29L, 29R), and conveying the belt-form dough through the discharge gap onto the said lower conveyor (53) after step (ii) is finished;
(v) a step of charging the divided dough bodies into the said shaping hopper (23) from the downstream end of the upper conveyor (15) during step (iv), when the said level sensor (25) switches from ON to OFF due to the level of the dough in the shaping hopper (23) becoming lower than the predetermined level;
(vi) a step of repeating step (v) whenever the level sensor (25) switches from ON to OFF; and
(vii) a step of calculating the hourly throughput of edible dough by dividing the weight of a number of divided edible dough bodies by the time taken for charging that number of dough bodies, by means of the said calculating device (67), and controlling the said adjusting device (47) by means of the control means so as to adjust the size of the discharge gap between the pair of shaping/conveying devices (29L, 29R), namely to enlarge the average (or minimum) size of the gap when the hourly throughput is below a predetermined amount and reduce it when the hourly throughput is above the predetermined amount.

## Patentansprüche

1. Vorrichtung zur Herstellung von bandförmigem, eßbarem Teig (W) mit:
einem Teilungstrichter (5) für eßbaren Teig zwecks Zufuhr des Teigs zu einem Teiler;
einer abteilenden Schneideinrichtung (7), die derart angeordnet ist, daß sie an der Bodenöffnung des Teilungstrichters (5) den eßbaren Teig abschneidet und teilt;
einem oberen Förderer (5), der derart angeordnet ist, daß er die abgeteilten Teigkörper stromabwärts fördert und unter der genannten teilenden Schneideinrichtung (7) positioniert ist;
einem Formtrichter (23), der derart angeordnet ist, daß er die abgeteilten Teigkörper empfängt und unterhalb des stromabwärtigen Endes des oberen Förderers (15) positioniert ist;
einem zwischen AN oder AUS schaltbarem Niveausensor (25), der derart angeordnet ist, daß er feststellt, ob das Niveau des eßbaren Teiges in dem Formtrichter (23) ein vorbestimmtes Niveau erreicht hat;
einem Paar formender/transportierender Einrichtungen (29L, 29R), die in einer V-förmigen Konfiguration angeordnet sind, um den Teig zu quetschen und in eine Bandform zu konfigurieren, sowie ihn stromabwärts zu fördern, wobei dieselben an der Bodenöffnung des Formtrichters (23) positioniert sind;
einem Fördermotor (35L, 35R) für den Antrieb der genannten Form/Fördereinrichtungen (29L, 29R);
einer Einstelleinrichtung (47) zur Festsetzung eines eingestellten Auslaßspaltabstands zwischen den genannten Form/Fördereinrichtungen (29L, 29R);
einer Fördereinrichtung (53), die derart angeordnet ist, daß sie den bandförmigen eßbaren Teig trägt, und die unterhalb des Paars von Form/Fördereinrichtungen (29L, 29R) positioniert ist;
einer Steuereinrichtung zur Energiezufuhr zu dem genannten Fördermotor (35L, 35R) für den Antrieb der Form/Fördereinrichtungen (29L, 29R), wenn der genannte Niveausensor (25) von AUS auf AN schaltet, sobald der eßbare Teig in dem Formtrichter (23) ein vorbestimmtes Niveau erreicht, und zur Steuerung der Ladung der abgeteilten eßbaren Teigkörper in den Formtrichter (23), sobald der Niveausensor (25) von AN auf AUS schaltet, nachdem der genannte Motor (35L, 35R) für den Antrieb der Form/Fördereinrichtung (29L, 29R) mit Energie gespeist wurde,
einer Gewichtsfeststelleinrichtung (21), die derart angeordnet ist, daß sie aufeinanderfolgend das Gewicht jedes der abgeteilten Teigkörper feststellt, die auf den oberen Förderer (15) fallengelassen wurden;
einem Timer (69), der derart angeordnet ist, daß er aufeinanderfolgend die Zeit feststellt, die für das Einfüllen der abgeteilten eßbaren Teigkörper vom oberen Förderer in den Formtrichter (23) benötigt wurde; und
einem Rechner (67), der derart angeordnet ist, daß er den stündlichen Durchsatz an eßbarem Teig berechnet, und zwar durch Teilung des Gewichts einer Anzahl von abgeteilten eßbaren Teigkörpern durch die Zeit, die für das Einfüllen dieser Anzahl an abgeteilten eßbaren Teigkörpern benötigt wurde, nachdem der genannte Motor (35L, 35R) gespeist worden ist;
wobei die genannte Einstelleinrichtung derart angeordnet ist, daß sie die Durchschnittsgröße (oder Minimalgröße) des Auslaßspalts vergrößert, sobald der stündliche Durchsatz unter einer vorbestimmten Menge liegt, und die Durchschnittsgröße (oder Minimalgröße) des Auslaßspalts reduziert, wenn der stündliche Durchsatz oberhalb dieser vorbestimmten Menge liegt.

2. Vorrichtung nach Anspruch 1, bei welcher die genannten Form/Fördereinrichtungen (29L, 219R) ein Paar Rollenelemente (31L, 31R) aufweisen, die eine Mehrzahl von Rollen (33L, 33R) tragen, die Seite an Seite von ihren obersten Rollen bis zu ihren untersten Rollen angeordnet sind, wobei jede der Rollen in der Richtung drehbar ist, in welche der Teig gefördert wird.

3. Vorrichtung nach Anspruch 2, bei welcher zumindest eines der genannten Paare von Rollenelementen (31L, 31R) an seinem oberen Ende auf einer Achse (37L, 37R) angebracht ist, um in Richtung auf das andere Element zu und von diesem wieder weg schwingen zu können, um den Auslaß aus dem Auslaßspalt zwischen den Elementen (31L, 31R) zu beschleunigen.

4. Vorrichtung nach Anspruch 2 oder 3, bei welcher der Fördermotor für den Antrieb der Form/Fördereinrichtung derart angeordnet ist, daß er gleichzeitig die genannten Form/Förderrollen (33L, 33R) des Paars Rollenelemente (31L, 31R dreht, und die ferner umfaßt:
einen Sensor (59) zur Feststellung der Durchflußmenge, der derart angeordnet ist, daß er die Menge an bandförmigem eßbaren Teig feststellt, die senkrecht aus dem Auslaßspalt auf den genannten Förderer (53) abgegeben wird; und
einer Steuereinrichtung, die derart angeordnet ist, daß sie den genannten Fördermotor (35L, 35R) für den Antrieb der Form/Fördereinrichtungen (29L, 29R) antreibt, um die Drehzahl der genannten Form/Förderrollen (33L, 33R) zu vergrößern, wenn festgestellt wird, daß der Teig von der senkrechten Richtung in Richtung auf das stromabwärtige Ende des genannten Förderers (53) abweicht, und die Drehzahl der genannten Rollen (33L, 33R) zu verringern, wenn festgestellt wird, daß der Teig von seiner senkrechten Richtung in Richtung auf das stromaufwärtige Ende des Förderers (53) abweicht.

5. Vorrichtung nach Anspruch 1, bei welcher die genannten Form/Fördereinrichtungen ein Paar Form/Fördergurte umfassen, die in der Richtung drehbar sind, in die der Teig gefördert wird, wobei die Gurte sich vom obersten Teil zum untersten Teil dieser Einrichtungen erstrecken, sowie zumindest eine dieser Einrichtungen an ihrem oberen Ende auf einer Achse angebracht ist, um in Richtung auf die andere Einrichtung und wieder weg von ihr schwingbar zu sein und den Auslaß von Teig aus einem Bodenspalt zwischen den beiden Gurten zu beschleunigen.

6. Vorrichtung nach einem der vorhergehenden Ansprüche, bei welcher die Steuereinrichtung derart angeordnet ist, daß sie die genannte Teil- und Schneideinrichtung (7) betätigt, wenn der genannte Niveausensor (25) nach der Energiezufuhr zum Fördermotor (35L, 35R) von AN auf AUS schaltet.

7. Verfahren zum Betreiben der Vorrichtung nach Anspruch 1 mit den folgenden Schritten:
(i) einem Schritt der Zufuhr abgeteilter eßbarer Teigkörper (W) auf den genannten oberen Förderer (15) durch Abschneiden und Abteilen des eßbaren Teigs durch die genannte Teilungsschneideinrichtung (7);
(ii) einem Schritt des Förderns der abgeteilten Teigkörper mittels des genannten oberen Förderers (15) und Einfüllens der Teigkörper in den genannten Formtrichter (23) vom stromabseitigen Ende des oberen Förderers (15), nachdem der Schritt (i) beendet worden ist;
(iii) einem Schritt der Energiezufuhr zu dem genannten Fördermotor (35L, 35R) durch die genannte Steuereinrichtung, sobald der genannte Niveausensor (25) in Abhängigkeit davon, daß das Niveau des zugeführten Teigs in dem Formtrichter (23) als Ergebnis von wiederholten Schritten (i) und (ii) ein vorbestimmtes Niveau erreicht, von AUS auf AN schaltet;
(iv) einem Schritt des Quetschen und Formens des Teigs durch das genannte Paar von Form/Fördereinrichtungen (29L, 29R) in eine Bandform, sowie Förderns des bandförmigen Teigs durch den Auslaßspalt auf den unteren Förderer (53), nachdem Schritt (ii) beendet worden ist;
(v) einem Schritt des Einfüllens der abgeteilten Teigkörper in den genannten Formtrichter (23) von dem stromabwärtigen Ende des oberen Förderers (15) während des Schritts (iv), wenn der genannte Niveausensor (25) von AN auf AUS schaltet, und zwar, weil das Niveau des Teigs in dem Formtrichter (23) niedriger wird als das vorbestimmte Niveau;
(vi) einem Schritt der Wiederholung des Schritts (v), wenn immer der Niveausensor (25) von AN auf AUS schaltet, und
(vii) einem Schritt der Berechnung des stündlichen Durchsatzes an eßbarem Teig durch Teilung des Gewichts einer Anzahl an abgeteilten eßbaren Teigkörpern durch die Zeit, die für das Einfüllen dieser Anzahl an Teigkörpern erforderlich ist, mittels der genannten Recheneinrichtung (67), und Steuerung der genannten Einstelleinrichtung (47) mittels der Steuereinrichtung, derart, daß die Größe des Auslaßspalts zwischen dem Paar von Form/Fördereinrichtungen (29L, 29R) eingestellt wird, nämlich um die Durchschnittsgröße (oder Minimalgröße) des Spalts zu vergrößern, wenn der stündliche Durchsatz unterhalb einer vorbestimmten Menge liegt, und um ihn zu reduzieren, wenn der stündliche Durchsatz oberhalb der vorbestimmten Menge liegt.

## Revendications

1. Appareil de production pour une pâte comestible (W) en forme de bande comportant :
un magasin (5) de diviseur pour de la pâte comestible, destiné à alimenter un diviseur en pâte ;
un dispositif (7) de coupe de division agencé de façon à couper et diviser la pâte comestible à l'ouverture du fond dudit magasin (5) du diviseur ;
un transporteur supérieur (15) agencé de façon à porter vers l'aval des masses de pâte divisées et disposé en dessous dudit dispositif de coupe (7) de division ;
un magasin (23) de mise en forme agencé de façon à recevoir les masses de pâte divisées et disposé en dessus de l'extrémité d'aval dudit transporteur supérieur (15) ;
un capteur (25) de niveau pouvant être commuté entre des états EN et HORS, agencé pour détecter si le niveau de la pâte comestible dans le magasin (23) de mise en forme a atteint un niveau prédéterminé ;
une paire de dispositifs de mise en forme/transport (29L, 29R) agencés dans une configuration en forme de V pour comprimer et mettre en forme la pâte en une forme de bande et la transporter vers le bas, disposés à l'ouverture du fond dudit magasin (23) de mise en forme ;
un moteur (35L, 35R) de transport destiné à entraîner lesdits dispositifs de mise en forme/transport (29L, 29R) ;
un dispositif (47) de réglage destiné à établir un intervalle réglé d'un espace de décharge entre lesdits, dispositifs de mise en forme/transport (29L, 29R) ;
un transporteur (53) agencé de façon à porter la pâte comestible en forme de bande et disposé en dessous de ladite paire de dispositifs de mise en forme/transport (29L, 29R) ;
un moyen de commande agencé de façon à alimenter en énergie ledit moteur de transport (35L, 35R) pour l'entraînement desdits dispositifs de mise en forme/transport (29L, 29R) lorsque ledit capteur (25) de niveau passe de l'état HORS à l'état EN du fait de l'arrivée de la pâte comestible à un niveau prédéterminé dans le magasin (23) de mise en forme, et à commander le chargement des masses de pâte comestible divisées dans le magasin (23) de mise en forme lorsque le capteur (25) de niveau passe de l'état EN à l'état HORS, après que ledit moteur (35L, 35R) d'entraînement du dispositif (29L, 29R) de mise en forme/transport a été alimenté en énergie ;
un dispositif (21) de détection de poids agencé de façon à détecter successivement le poids de chacune des masses de pâte divisées qui sont tombées sur le transporteur supérieur (15) ;
une minuterie (69) agencée de façon à détecter successivement le temps mis pour charger les masses de pâte comestible divisées du transporteur supérieur dans le magasin (23) de mise en forme ; et
un dispositif de calcul (67) agencé de façon à calculer le débit horaire de pâte comestible en divisant le poids d'un certain nombre de masses de pâte comestible divisées par le temps mis pour charger ce nombre de masses de pâte comestible divisées après l'alimentation en énergie dudit moteur (35L, 35R) ;
ledit dispositif de réglage étant agencé de façon à augmenter la taille moyenne (ou minimale) de l'intervalle de décharge lorsque le débit horaire est inférieur à une quantité prédéterminée et à réduire la taille moyenne (ou minimale) de l'intervalle de décharge lorsque le débit horaire est supérieur à ladite quantité prédéterminée.

2. Appareil selon la revendication 1, dans lequel lesdits dispositifs (29L, 29R) de mise en forme/transport comprennent une paire d'éléments à rouleaux (31L, 31R) portant plusieurs rouleaux (33L, 33R) disposés côte à côte depuis leurs rouleaux les plus hauts jusqu'à leurs rouleaux les plus bas, chaque rouleau pouvant tourner dans le sens dans lequel la pâte est transportée.

3. Appareil selon la revendication 2, dans lequel au moins l'un de ladite paire d'éléments à rouleaux (31L, 31R) est monté par ses extrémités supérieures sur un axe (37L, 37R) de façon à pouvoir se rapprocher et s'éloigner en pivotant de l'autre desdits éléments pour accélérer la décharge depuis l'intervalle de décharge entre lesdits éléments (31L, 31R).

4. Appareil selon la revendication 2 ou 3, dans lequel ledit moteur de transport destiné à entraîner le dispositif de mise en forme/transport est agencé de façon à faire tourner simultanément lesdits rouleaux de mise en forme/transport (33L, 33R) de la paire d'éléments à rouleaux (31L, 31R); et comportant en outre:
un capteur (59) de détection de quantité d'écoulement agencé de façon à détecter la quantité de pâte comestible en forme de bande qui est déchargée perpendiculairement de l'intervalle de décharge sur ledit transporteur (53) ; et
un moyen de commande agencé de façon à commander ledit moteur de transport (35L, 35R) pour l'entraînement dudit dispositif de mise en forme/transport (29L, 29R) afin d'augmenter la vitesse de rotation desdits rouleaux de mise en forme/transport (33L, 33R) s'il est détecté que la pâte est déviée vers l'extrémité d'aval dudit transporteur (53) à partir de la direction perpendiculaire, et pour ralentir la vitesse de rotation desdits rouleaux (33L, 33R) s'il est détecté que la pâte est déviée vers l'extrémité d'amont du transporteur (53) à partir de la direction perpendiculaire.

5. Appareil selon la revendication 1, dans lequel lesdits dispositifs de mise en forme/transport comprennent une paire de bandes de mise en forme/transport pouvant tourner dans le sens dans lequel la pâte est transportée, les bandes s'étendant de la partie la plus haute à la partie la plus basse de ces dispositifs, et au moins l'un desdits dispositifs étant monté sur un axe par son extrémité supérieure afin de pouvoir se rapprocher et s'éloigner en pivotant de l'autre dispositif pour accélérer la décharge de pâte depuis un intervalle inférieur entre les deux bandes.

6. Appareil selon l'une quelconque des revendications précédentes, dans lequel ledit moyen de commande est agencé de façon à actionner ledit dispositif de coupe de division (7) lorsque ledit capteur (25) de niveau passe de l'état EN à l'état HORS après que le moteur de transport (35L, 35R) a été alimenté en énergie.

7. Procédé pour faire fonctionner l'appareil selon la revendication 1, comprenant les étapes suivantes:
i. une étape consistant à amener des masses de pâte comestible divisées (W) sur ledit transporteur supérieur (15) en coupant et divisant la pâte comestible à l'aide dudit dispositif de coupe de division (7) ;
ii. une étape de transport des masses de pâte divisées au moyen dudit transporteur supérieur (15) et de chargement des masses de pâte dans ledit magasin (23) de mise en forme depuis l'extrémité d'aval dudit transporteur supérieur (15) après l'achèvement de ladite étape (i) ;
iii. une étape d'alimentation en énergie dudit moteur (35L, 35R) de transport par ledit moyen de commande lorsque ledit capteur (25) de niveau passe de l'état HORS à l'état EN du fait que le niveau de la pâte chargée dans le magasin (23) de mise en forme atteint un niveau prédéterminé par suite de la répétition des étapes (i) et (ii) ;
iv. une étape de compression et de mise en forme de la pâte en forme de bande par ladite paire de dispositifs (29L, 29R) de mise en forme/transport, et de transport de la pâte en forme de bande à travers l'intervalle de décharge jusque sur ledit transporteur inférieur (53) après l'achèvement de l'étape (ii) ;
v. une étape de chargement des masses de pâte divisées dans ledit magasin (23) de mise en forme depuis l'extrémité d'aval du transporteur supérieur (15) pendant l'étape (iv) lorsque ledit capteur (25) de niveau passe de l'état EN à l'état HORS du fait que le niveau de la pâte dans le magasin (23) de mise en forme devient inférieur au niveau prédéterminé ;
vi. une étape de répétition de l'étape (v) lorsque le capteur (25) de niveau passe de l'état EN à l'état HORS ; et
vii. une étape de calcul du débit horaire de pâte comestible en divisant le poids d'un certain nombre de masses de pâte comestible divisées par le temps mis pour charger ce nombre de masses de pâte, au moyen dudit dispositif de calcul (67), et de commande dudit dispositif de réglage (47) à l'aide du moyen de commande afin de régler la taille de l'intervalle de décharge entre la paire de dispositifs (29L, 29R) de mise en forme/transport, à savoir pour augmenter la taille moyenne (ou minimale) de l'intervalle lorsque le débit horaire est inférieur à une quantité prédéterminée et pour la réduire lorsque le débit horaire est supérieur à la quantité prédéterminée.
